# EUROPEAN PATENT SPECIFICATION

(11) **EP 2 321 709 B1**
(45) Date of publication and mention of the grant of the patent: **07.10.2015**
(21) Application number: 08797149.5
(22) Date of filing: 04.08.2008
(51) Int. Cl.: G05D 1/00, B64C 13/04, H01H 36/00

(54) **AUTOMATIC FLIGHT CONTROL SYSTEM WITH A FORCE GRADIENT DEVICE USING A NON-CONTACT PROXIMITY SENSOR**
AUTOMATISCHES FLUGSTEUERSYSTEM MIT EINEM KRAFTGRADIENTGERÄT UNTER VERWENDUNG EINES KONTAKTLOSEN PROXIMITÄTSSENSORS
COMMANDE AUTOMATIQUE DE VOL AVEC UN DISPOSITIF DE GRADIENT DE FORCE UTILISANT UN CAPTEUR DE PROXIMITÉ SANS CONTACT

(43) Date of publication of application: 18.05.2011
(73) Proprietor: Bell Helicopter Textron Inc., Hurst, TX 76053 (US)
(72) Inventor: DOVERSBERGER, Terry, G., North Richland Hills Texas 76180 (US)
(74) Representative: Lawrence, John
(86) International application number: PCT/US2008/072147
(87) International publication number: WO 2010/016829

(56) References cited:
- JP-A- H11 108 605
- US-A- 3 175 786
- US-A- 3 504 279
- US-A- 3 733 039
- US-A- 4 563 743
- US-A1- 2008 065 278
- US-B2- 7 098 811
- US-B2- 7 098 811
- US-B2- 7 273 231

## Description

### FIELD

The present disclosure relates to aircraft control systems and, more particularly, an improved design for a force gradient using a non-contact proximity sensor.

### BACKGROUND

In the field of aeronautics, a cyclic stick refers to a control device for the pilot to enable turns and forward power of an aircraft, particularly a helicopter. The cyclic stick typically uses a force gradient mechanism so that the amount of force applied to the cyclic stick translates into the desired control feel. A typical force gradient incorporates a spring that compresses as the pilot applies force to the cyclic stick. As the pilot increases the force applied to the cyclic stick, the spring compresses more and the control input becomes greater in magnitude.

Modern helicopters are equipped with an automatic flight control system (AFCS) and can be flown by either the manual input of the pilot or the AFCS. Typically, there is no automatic control to turn on and off the AFCS, and the input from the cyclic stick signals the pilot's intention to take over the control. In order to correctly interpret the pilot's intention, there must be a mechanism to determine whether or not the input received from the cyclic is indeed caused by the pilot or by an unintended change in flight conditions such as a wind gust, shift of center of gravity (CG), etc.

Traditional force gradient switches utilize a mechanical actuator mechanism to control the operation of an AFCS. The mechanical actuator mechanism requires frequent adjustment to maintain proper operating conditions. Oftentimes, the adjustment or maintenance requires disassembling the force gradient to gain access and service the inner parts. Due to such issues and inconveniences associated with the mechanical switch design, there is a need for a more convenient yet reliable solution that provides benefits over the conventional force gradient design.

An example of a known system is US 7098811 which discloses a tactile cueing system for an aircraft control system that provides limit proximity information to a pilot without interfering with the pilot's control motion.

### SUMMARY

The present invention concerns an Automatic Flight Control System (AFCS), the use of the system in an helicopter and a method of providing an Automatic Flight Control System as defined by the features of claims 1, 9 and 10 respectively.

An improved design for a force gradient using a proximity sensor is disclosed. A force gradient comprises a shaft having a first end and a second end. The force gradient includes a spring contained between the first end and the second end and a non-contact proximity sensor mounted on the second end. The spring has a first position and is compressed to a second position so that the non-contact proximity sensor signals an AFCS to change state.

In accordance with the purpose of the various embodiments described herein, as broadly described herein, the subject matter of this patent relates to a force gradient used for a control input to an aircraft or a helicopter.

The above and other preferred features, including various novel details of implementation and combination of elements will now be more particularly described with reference to the accompanying drawings and pointed out in the claims. It will be understood that the particular methods and apparatus are shown by way of illustration only and not as limitations. As will be understood by those skilled in the art, the principles and features explained herein may be employed in various and numerous embodiments.

### BRIEF DESCRIPTION OF THE DRAWINGS

The accompanying drawings, which are included as part of the present specification, illustrate the presently preferred embodiment of the present invention and together with the general description given above and the detailed description of the preferred embodiment given below serve to explain and teach the principles of the present invention.
Figure 1 shows a prior art force gradient without an AFCS switch;
Figures 2A-2C show a prior art force gradient incorporating a mechanical switch to control the input to the AFCS;
Figure 3 shows another prior art force gradient incorporating an improved mechanical switch to control the input to the AFCS;
Figures 4A and 4B show an exemplary force gradient using a non-contact proximity sensor, according to one embodiment; and
Figures 5A and 5B show alternative views of an exemplary force gradient using a non-contact proximity sensor, according to one embodiment.

It should be noted that the figures are not necessarily drawn to scale and that elements of similar structures or functions are generally represented by like reference numerals for illustrative purposes throughout the figures. It also should be noted that the figures are only intended to facilitate the description of the various embodiments described herein. The figures do not describe every aspect of the teachings described herein and do not limit the scope of the claims.

### DETAILED DESCRIPTION

An improved design for a force gradient using a proximity sensor is disclosed. A force gradient comprises a shaft having a first end and a second end. The switch includes a spring contained between the first end and the second end and a non-contact proximity sensor mounted on the second end. The spring has a first position and is compressed to a second position so that the non-contact proximity sensor signals an AFCS to change state.

Each of the additional features and teachings disclosed herein can be utilized separately or in conjunction with other features and teachings to provide an improved design for a force gradient using a proximity sensor. Representative examples utilizing many of these additional features and teachings, both separately and in combination, are described in further detail with reference to the attached drawings. This detailed description is merely intended to teach a person of skill in the art further details for practicing preferred aspects of the present teachings and is not intended to limit the scope of the claims. Therefore, combinations of features disclosed in the following detailed description may not be necessary to practice the teachings in the broadest sense, and are instead taught merely to describe particularly representative examples of the present teachings.

It is also expressly noted that all value ranges or indications of groups of entities disclose every possible intermediate value or intermediate entity for the purpose of original disclosure, as well as for the purpose of restricting the claimed subject matter. It is also expressly noted that the dimensions and the shapes of the components shown in the figures are designed to help to understand how the present teachings are practiced, but not intended to limit the dimensions and the shapes shown in the examples.

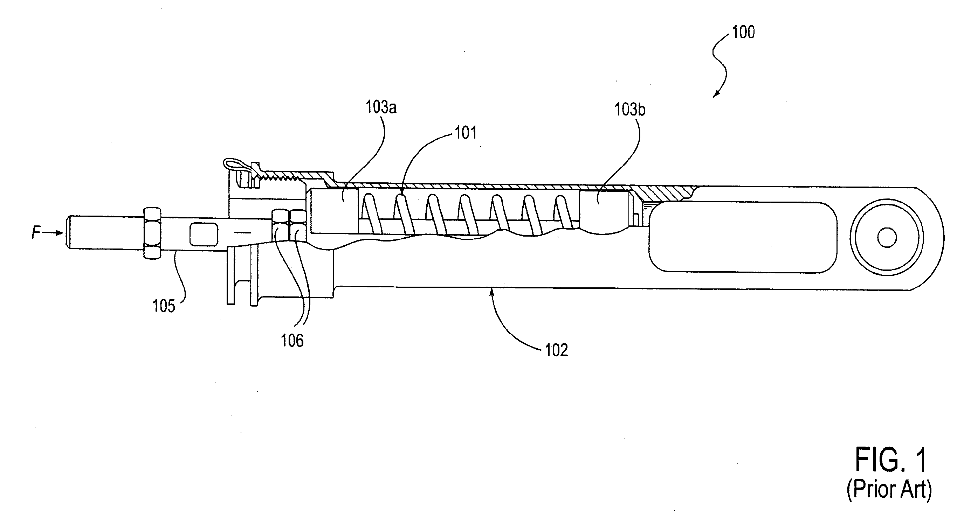

Figure 1 shows a prior art force gradient without an AFCS switch. The force gradient 100 provides a centering force for the cyclic and/or directional controls such as pitch, roll and yaw of an helicopter. The force gradient 100 is coupled to one end of the cyclic and concealed under the floor of the helicopter's cockpit. Spring 101 is contained within cylinder 102 by end caps 103 on both ends. An appropriate spring 101 is selected to provide proper stiffness, weight and length in accordance with the design specification. The spring rate determines the level of stiffness of the cyclic, thus it varies with the size and design of the cyclic.

A break-out force is required to start compressing spring 101. The break-out force is adjusted by making end cap 103a contact spring 101 in its natural length, thus preventing free-play or a dead-zone wherein no spring compression occurs with an increase in input force. Adjustment nuts 106 might be further tightened to create a non-zero break-out force. The applied force F must be greater than the compressed spring force to push spring assembly shaft 105 inward. The break-out force value, although related, is a separate requirement from the spring's specification.

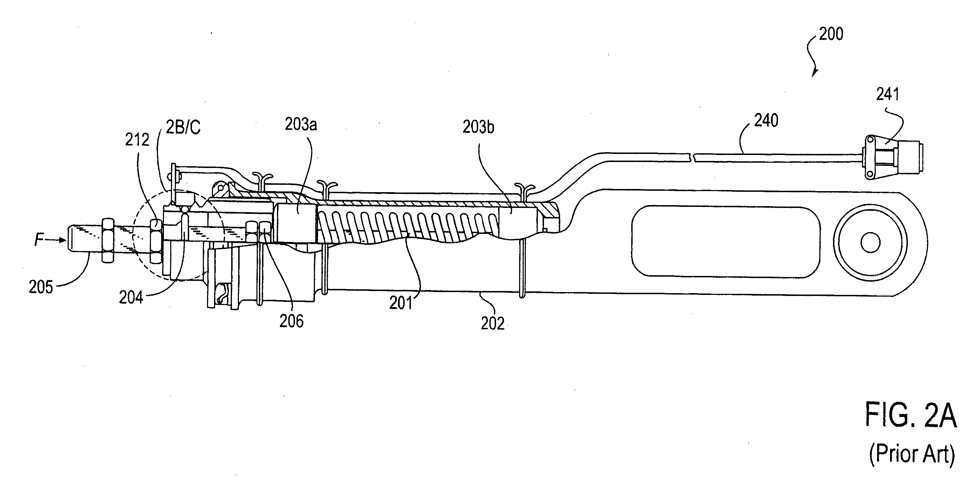

Figures 2A-2C show a prior art force gradient incorporating a mechanical switch to control the input to the AFCS. Actuator 204 is threaded onto spring assembly shaft 205 and locked in place with actuator jam nut 212. A steel ball 211 is placed inside retainer 213 and preloaded with switch 210. As actuator 204 passes by the neutral position, steel ball 211 rolls against it, and resultantly pushes micro switch 210. The electrical signal generated from micro switch 210 is plugged to the AFCS (not shown) through wire 240 and connector 241.

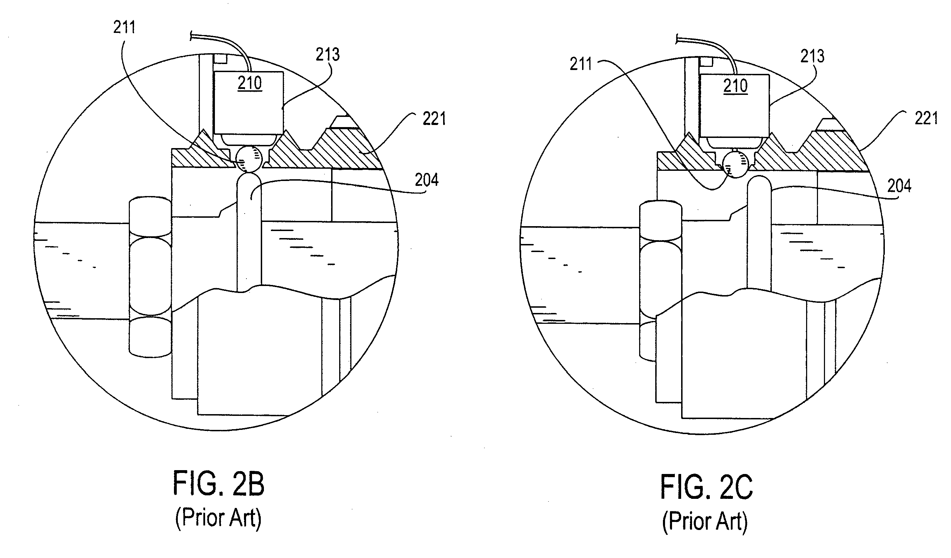

Figure 2B shows a prior art configuration of a neutral position where there is no pilot input (or the applied force is smaller than the break-out force). Actuator 204 pushes up ball 211 to actuate micro switch 210 and signals the AFCS to take over control of the helicopter. Figure 2C illustrates that when an input force is applied that is greater than the break-out force, spring 201 is compressed, and actuator 204 moves such that ball 211 moves lower within retainer 213 of ball guide 221. As a result, micro switch 210 opens and a control signal is generated to inform the AFCS to release control of the helicopter to the pilot. Similar to the force gradient 100, force gradient 200 requires end cap 203a to be properly adjusted so that actuator 204 positions at the neutral position without free-play and creates an appropriate break-out force.

Actuator adjustment is a sensitive process and sometimes requires multiple trials to achieve proper seating of actuator 204. An adjustable-length rod end bearing or clevis is threaded onto spring assembly shaft 205. Jam nut 212 is conveniently located outside of actuator 204 for the adjustment for break-out force or free-play. In some cases, the rod end bearing or clevis is positioned too far down the spring assembly shaft 205 so that actuator jam nut 212 is placed on the inside of actuator 204 as opposed to the outside of actuator 204. In this case, force gradient 200 needs to be disassembled to gain access and appropriately torque actuator jam nut 212. While making this adjustment, ball 211 is prevented from falling or jamming due to the tight tolerances required for machining ball 211 and ball guide 221. Another problem associated with the design of force gradient 200 is that the repeated movement of actuator 204 creates a groove in the path and causes sticky operation, which is undesirable for accurate control of micro switch 210.

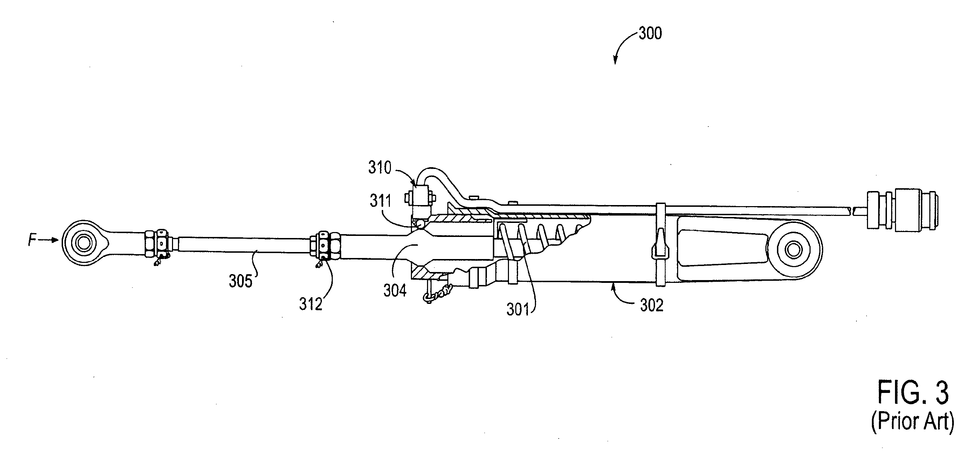

Figure 3 shows another prior art force gradient incorporating an improved mechanical switch to control the input to the AFCS. Force gradient 300 is an improved design over force gradient 200 such that it reduces wear by actuator 304 by minimizing the contact angle between ball 311 and actuator 304. It also relocates actuator jam nut 312 farther outside cylinder 302 so that adjustment can be made with ease. Despite these improvements, force gradient 300 causes disadvantages in other respects; it requires a unique actuator for each application and the range of adjustment on the break-out force is greatly narrowed. In addition, force gradient switch 310 needs to be adjusted up or down to achieve a correct operating range of motion. These adjustments significantly vary due to the radial play of shaft 305 with respect to cylinder 302. While making these adjustments, over-torquing is likely to damage the components and ultimately affect the operation and reliability of force gradient 300.

There are two major problems associated with prior art force gradient 200 or 300: the requirement for frequent adjustment and the reliability issue over time due to mechanical wear and tear. According to one embodiment, the present switch resolves these problems by replacing the mechanical switch in a force gradient with a non-contact proximity sensor.

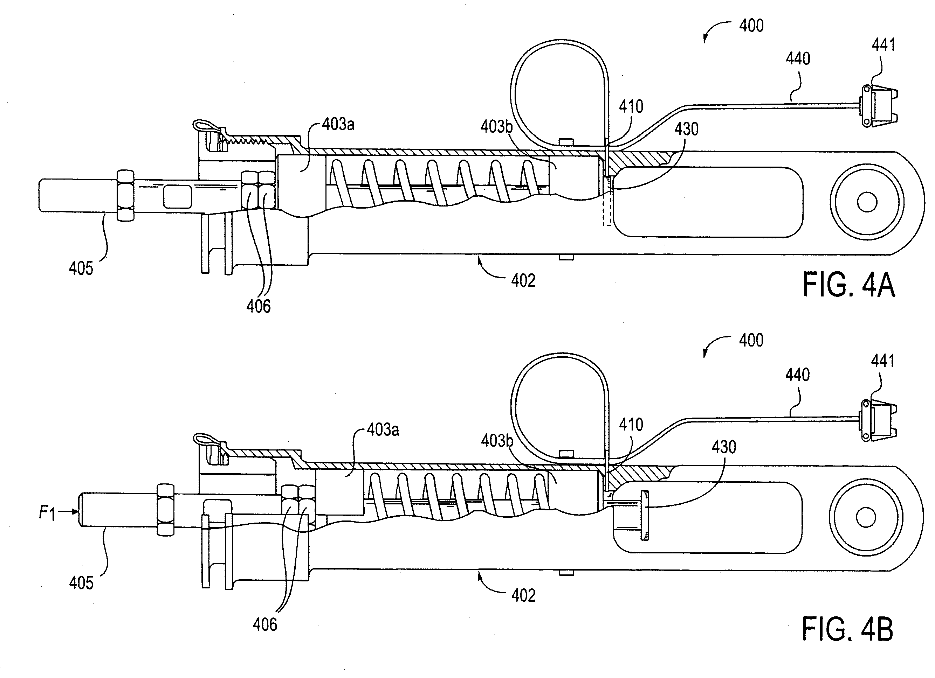

Figures 4A and 4B show an exemplary force gradient 400 using a non-contact proximity sensor 410, according to one embodiment. Sensor 410 may be an inductive sensor, a capacitive sensor, a magnetic sensor, a Hall-effect sensor or similar sensor that detects the presence or absence of an object within a close proximity. The electrical output from sensor 410 is routed and plugged to the AFCS (not shown) through wire 440 using connector 441. Connector 441 may be similar to connectors 241 or 341 used for a micro switch in Figures 2 and 3.

It is understood that other suitable non-contact sensors can be used without deviating from the scope of the present embodiments. Mechanical contact between an actuator and ball is eliminated using the present proximity sensor 410. The adjustment required to properly align an actuator with respect to a ball (thus to a micro switch) is also eliminated.

The free end of spring assembly shaft 405 contains a large diameter end plate 430. End plate 430 may be machined as a part of shaft 405 or assembled onto shaft 405 as a separate part. End plate 430 is allowed to pass by sensor 410 to activate the switch. With no pilot input, end plate 430 stays in close proximity to sensor 410 and signals the AFCS to operate (Figure 4A). A minimum force F is required to deactivate the AFCS. When the pilot applies a force F+ΔF that is greater than the break-out force F, shaft 405 is pushed inward, spring 401 is compressed, end plate 430 moves out of the detection range of sensor 410, thus signaling the AFCS to deactivate (Figure 4B). When the pilot removes the force by releasing the cyclic, end plate 430 returns to the detection range of sensor 410 by the spring force, and thereby signals the AFCS to retake control of the aircraft (Figure 4A).

The break-out force F is appropriately set to effectively filter and eliminate unwanted or accidental inputs by the pilot. For example, the vibrational energy generated by the rotors of the helicopter may be transmitted to the cyclic through the body. Excessive disturbances (e.g., winds) or continuously changing inertia effects during the operation (e.g., gravity, acceleration) may cause a wrongful input to the force gradient. These unwanted and unintended inputs are filtered by simply setting an appropriate break-out force. In one embodiment, the force gradient 400 may be coupled with various types of sensors such as gyroscopes or accelerometers to further facilitate the distinction of intended inputs by the pilot from unwanted and unintended inputs.

According to one embodiment, sensor 410 may be nominally open or closed depending on the sensor selected. The range of detection varies depending on the material selection of end plate 430, the sensor type, environmental or operating conditions. A proper design for the proximity sensor is carefully chosen by taking into account these design factors.

It is understood that various shapes, designs and materials of end plate 430 can be used without departing from the scope of the present embodiment. For example, if sensor 410 is positioned at a different location on cylinder 402, end plate 430 is relocated on shaft 405 to be properly aligned with sensor 410. Typically, the material selection is closely linked to the sensor type. For instance, if an inductive sensor is used, a material having proper inductance should be used. If a magnetic sensor is used, a part of end plate 430 should be magnetized or a magnet should be mounted thereto.

According to one embodiment, a Hall-effect sensor is used to detect the directional dependency of the pilot's input. For example, when the pilot's input is applied, a current is induced in one direction by the movement of end plate 430 with respect to sensor 410. When the pilot release the cyclic, the current is induced in the opposite direction. By detecting the direction of the induced current, the state of the switch is transitioned (i.e., 'on'-to-'off' or 'off'-to-'on') as well as its static state (i.e., 'on' and 'off'). The switch's transitional state can be used as a control input to the AFCS.

According to one embodiment, sensor 410 has a small form-factor so that it can be inserted through a mounting hole on cylinder 402 as shown in Figure 4A. For example, the inductive sensor manufactured by Balluff of Florence, Kentucky (model number, BES 516-3046-G-E4-L-PU-05) is of cylindrical shape having a diameter of 3 mm and a length of 27 mm.

Sensor 410 and end plate 430 eliminates the need for actuator-ball alignment when break-out force adjustments are made. The mounting hole of sensor 410 is made within a design tolerance so that sensor 410 aligns with end plate 430 without manual adjustment. Typically, the gap between sensor 410 and end plate 430 is properly set using a shim of a certain thickness. The gap may not need to be accurately adjusted depending on the type of sensor 410 and end plate 430 being used. Alternatively, the electrical sensitivity of sensor 410 may be adjusted or calibrated accordingly to create a proper signal to the AFCS to avoid further manual adjustment.

With the improved design of the force gradient 400, there is no mechanical contact between the actuator and the sensor, thus issues involving wear and tear, binding and dust do not arise. Maintenance becomes easier since it removes the need for lubrication between contacting and moving parts. The likelihood of misalignment caused by the mechanical contact is also greatly reduced or even completely removed.

No adjustment is required to move force gradient 400 to adjust the rage of operation by forming end plate 430 onto shaft 405. Due to the integration of end plate 430 onto shaft 405, the pilot's input is less affected by the radial free-play of the shaft 405 with respect to force gradient 400. As a result, the pilot experiences improved feel for the switch with less wobble and more accurate feedback.

According to one embodiment, shaft 205 may be replaced with a new shaft that includes end plate 430 and sensor 410. A hole may be drilled to place sensor 410 onto cylinder 402 so that end plate 430 is properly aligned with the sensor 410. According to another embodiment, end plate 430 is formed or mounted outside of cylinder 420, and sensor 410 is mounted externally to cylinder 402 using a bracket or an attachment mechanism (not shown). Irrespective of the design choice, once sensor 410 and end plate 430 (or something equivalent) are aligned, no further adjustment or maintenance is required.

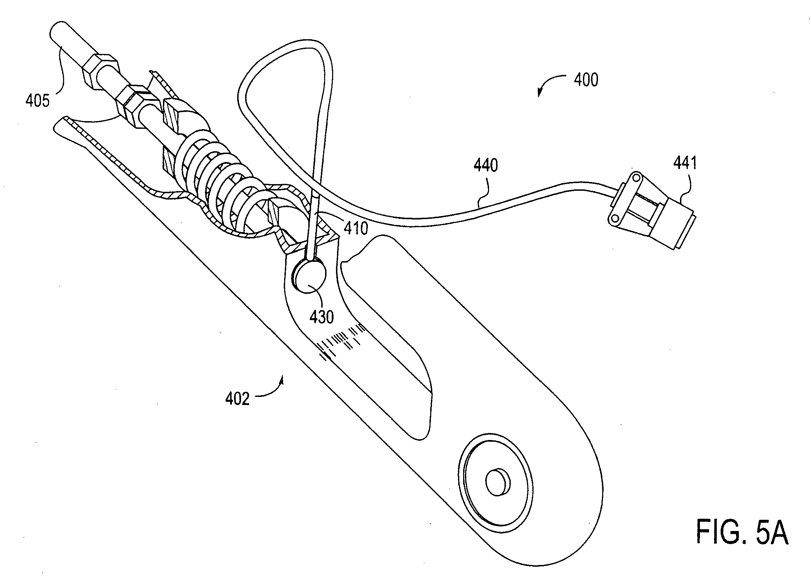

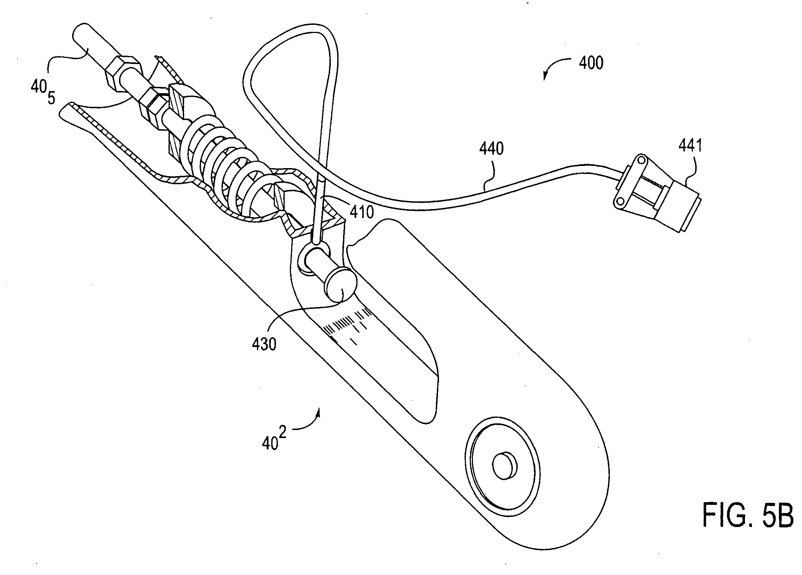

Figures 5A and 5B show perspective views of the exemplary force gradient 400, according to one embodiment. Figure 5A illustrates a force gradient 400 with the AFCS engaged, according to one embodiment. Force gradient 400 includes cylinder 402, shaft 405, sensor 410, end plate 430, wire 440, and connector 441. End plate 430 is aligned with sensor 410.

Figure 5B illustrates a force gradient 400 with the AFCS disengaged, according to one embodiment. Force gradient 400 includes cylinder 402, shaft 405, sensor 410, end plate 430, wire 440, and connector 441. End plate 430 is not aligned with sensor 410.

A force gradient using a non-contact proximity sensor has been described with respect to specific example and subsystems. It will be apparent to those of ordinary skill in the art that it is not limited to these specific examples or subsystems but extends to other embodiments as well.

## Claims

1. An Automatic Flight Control System comprising:
a force gradient (400) including:
a shaft (405) having a first end and a second end, wherein the second end includes an end plate (430);
a spring (401) contained between the first end and the second end; and
a non-contact proximity sensor (410) mounted on the second end;
wherein the spring (401) has a first position and is compressed to a second position so that the non-contact proximity sensor (410) detects the position of the end plate (430) to signal an AFCS to change state, wherein the state includes one of, AFCS on-to-off and AFCS off-to-on.

2. The Automatic Flight Control System of claim 1, wherein the spring (401) is compressed when the force gradient (400) is moved by at least a break-out force (F).

3. The Automatic Flight Control System of claim 1, wherein the end plate (430) is aligned with the non-contact proximity sensor (410) in the first position.

4. The Automatic Flight Control System of claim 1, wherein the non-contact proximity sensor (410) is one of a plurality of sensors, the plurality of sensors including an inductance sensor, a capacitive sensor, a magnetic sensor and a Hall-effect sensor.

5. The Automatic Flight Control System of claim 1, further comprising a wire (440) interconnecting the non-contact proximity sensor (410) and the AFCS.

6. The Automatic Flight Control System of claim 5, further comprising a connector (441) to couple the wire (440) and the AFCS.

7. The Automatic Flight Control System of claim 1, further comprising an outer cylinder (402) surrounding the spring (401), the outer cylinder (402) having a hole, and wherein the non-contact proximity sensor (410) is placed in the hole.

8. The Automatic Flight Control System of claim 7, wherein the hole is near the second end of the shaft (405).

9. The use of the AFCS of any preceding claim, wherein the AFCS is used with a helicopter.

10. A method of providing an Automatic Flight Control system, comprising:
creating a hole in a cylinder (402) of a force gradient (400);
attaching an end plate (430) to a shaft (405) of the force gradient (400), the end plate (430) aligning with the hole in the cylinder (402); and
mounting a non-contact proximity sensor (410) in the hole without contacting the end plate (430), wherein the non-contact proximity sensor (410) detects a position of the end plate (430) to signal an AFCS to change state, wherein the state includes one of, AFCS on-to-off and AFCS off-to-on.

11. The method of claim 10, further comprising generating a signal to change the state of an automatic flight control system (AFCS) when the force gradient (400) experiences a break out force (F).

12. The method of claim 11, wherein generating the signal further comprises moving the end plate (430) so that it is no longer aligned with the non-contact proximity sensor (410).

13. The method of claim 10, further comprising installing the force gradient (400) in a helicopter.

14. The method of claim 10, further comprising installing the force gradient (400) in an airplane.

## Patentansprüche

1. Automatisches Flugsteuersystem, das Folgendes umfasst:
einen Kraftgradienten (400), der Folgendes enthält:
eine Welle (405) mit einem ersten Ende und einem zweiten Ende, wobei das zweite Ende eine Endplatte (430) enthält;
eine Feder (401), die zwischen dem ersten Ende und dem zweiten Ende enthalten ist; und
einen kontaktfreien Näherungssensor (410), der am zweiten Ende montiert ist;
wobei die Feder (401) eine erste Position besitzt und zu einer zweiten Position komprimiert wird, so dass der kontaktfreie Näherungssensor (410) die Position der Endplatte (430) detektiert, um einem automatischen Flugsteuersystem (AFCS - Automatic Flight Control System) eine Zustandsänderung zu signalisieren, wobei der Zustand AFCS-Ein-zu-Aus oder AFCS-Aus-zu-Ein beinhaltet.

2. Automatisches Flugsteuersystem nach Anspruch 1, wobei die Feder (401) komprimiert wird, wenn der Kraftgradient (400) durch mindestens eine Losbrechkraft (F) bewegt wird.

3. Automatisches Flugsteuersystem nach Anspruch 1, wobei die Endplatte (430) in der ersten Position auf den kontaktfreien Näherungssensor (410) ausgerichtet ist.

4. Automatisches Flugsteuersystem nach Anspruch 1, wobei der kontaktfreie Näherungssensor (410) einer von mehreren Sensoren ist, wobei die mehreren Sensoren einen Induktanzsensor, einen kapazitiven Sensor, einen Magnetsensor und einen Hall-Effekt-Sensor beinhalten.

5. Automatisches Flugsteuersystem nach Anspruch 1, weiterhin umfassend einen Draht (440), der den kontaktfreien Näherungssensor (410) und das AFCS verbindet.

6. Automatisches Flugsteuersystem nach Anspruch 5, weiterhin umfassend einen Verbinder (441), um den Draht (440) und das AFCS zu koppeln.

7. Automatisches Flugsteuersystem nach Anspruch 1, weiterhin umfassend einen die Feder (401) umgebenden Außenzylinder (402), wobei der Außenzylinder (402) ein Loch besitzt und wobei der kontaktfreie Näherungssensor (410) im Loch platziert ist.

8. Automatisches Flugsteuersystem nach Anspruch 7, wobei sich das Loch nahe dem zweiten Ende der Welle (405) befindet.

9. Verwendung des AFCS nach einem vorhergehenden Anspruch, wobei das AFCS mit einem Hubschrauber verwendet wird.

10. Verfahren zum Bereitstellen eines automatischen Flugsteuersystems, das Folgendes umfasst:
Herstellen eines Lochs in einem Zylinder (402) eines Kraftgradienten (400);
Anbringen einer Endplatte (430) an einer Welle (405) des Kraftgradienten (400), wobei die Endplatte (430) auf das Loch im Zylinder (402) ausgerichtet ist; und
Montieren eines kontaktfreien Näherungssensors (410) in dem Loch ohne Kontaktieren der Endplatte (430), wobei der kontaktfreie Näherungssensor (410) eine Position der Endplatte (430) detektiert, um einem automatischen Flugsteuersystem (AFCS - Automatic Flight Control System) eine Zustandsänderung zu signalisieren, wobei der Zustand AFCS-Ein-zu-Aus oder AFCS-Aus-zu-Ein beinhaltet.

11. Verfahren nach Anspruch 10, weiterhin umfassend das Generieren eines Signals zum Ändern des Zustands eines automatischen Flugsteuersystems (AFCS), wenn der Kraftgradient (400) eine Losbrechkraft (F) erfährt.

12. Verfahren nach Anspruch 11, wobei das Generieren des Signals weiterhin das Bewegen der Endplatte (430) umfasst, so dass sie nicht länger auf den kontaktfreien Näherungssensor (410) ausgerichtet ist.

13. Verfahren nach Anspruch 10, weiterhin umfassend das Installieren des Kraftgradienten (400) in einem Hubschrauber.

14. Verfahren nach Anspruch 10, weiterhin umfassend das Installieren des Kraftgradienten (400) in einem Flugzeug.

## Revendications

1. Système de Commande de Vol Automatique, comprenant
un gradient de force (400) comportant :
un axe (405) ayant une première extrémité et une deuxième extrémité, la deuxième extrémité comportant une plaque d'extrémité (430) ;
un ressort (401) contenu entre la première extrémité et la deuxième extrémité ; et
un capteur de proximité sans contact (410) monté sur la deuxième extrémité ;
le ressort (401) ayant une première position et étant comprimé dans une deuxième position de telle sorte que le capteur de proximité sans contact (410) détecte la position de la plaque d'extrémité (430) pour signaler à un SCVA de changer d'état, l'état comportant soit la commutation marche à arrêt du SCVA soit la commutation arrêt à marche du SCVA.

2. Système de Commande de Vol Automatique selon la revendication 1, dans lequel le ressort (401) est comprimé lorsque le gradient de force (400) est déplacé par au moins une force de dégagement (F).

3. Système de Commande de Vol Automatique selon la revendication 1, dans lequel la plaque d'extrémité (430) est alignée avec le capteur de proximité sans contact (410) dans la première position.

4. Système de Commande de Vol Automatique selon la revendication 1, dans lequel le capteur de proximité sans contact (410) est l'un parmi une pluralité de capteurs, la pluralité de capteurs comportant un capteur à inductance, un capteur capacitif, un capteur magnétique et un capteur à effet de Hall.

5. Système de Commande de Vol Automatique selon la revendication 1, comprenant en outre un fil métallique (440) reliant entre eux le capteur de proximité sans contact (410) et le SCVA.

6. Système de Commande de Vol Automatique selon la revendication 5, comprenant en outre un connecteur (441) pour accoupler le fil métallique (440) et le SCVA.

7. Système de Commande de Vol Automatique selon la revendication 1, comprenant en outre un cylindre extérieur (402) entourant le ressort (401), le cylindre extérieur (402) ayant un trou, et le capteur de proximité sans contact (410) étant placé dans le trou.

8. Système de Commande de Vol Automatique selon la revendication 7, dans lequel le trou est proche de la deuxième extrémité de l'axe (405).

9. Utilisation du SCVA selon l'une quelconque des revendications précédentes, dans laquelle le SCVA est utilisé avec un hélicoptère.

10. Procédé pour fournir un Système de Commande de Vol Automatique, comprenant :
la création d'un trou dans un cylindre (402) d'un gradient de force (400) ;
la fixation d'une plaque d'extrémité (430) à un axe (405) du gradient de force (400), la plaque d'extrémité (430) s'alignant avec le trou dans le cylindre (402) ; et
le montage d'un capteur de proximité sans contact (410) dans le trou sans contact avec la plaque d'extrémité (430), le capteur de proximité sans contact (410) détectant une position de la plaque d'extrémité (430) pour signaler à un SCVA de changer d'état, l'état comportant soit la commutation marche à arrêt du SCVA soit la commutation arrêt à marche du SCVA.

11. Procédé selon la revendication 10, comprenant en outre la génération d'un signal pour changer l'état d'un système de commande de vol automatique (SCVA) lorsque le gradient de force (400) est soumis à une force de dégagement (F).

12. Procédé selon la revendication 11, dans lequel la génération du signal comprend en outre le déplacement de la plaque d'extrémité (430) de manière à ce qu'elle ne soit plus alignée avec le capteur de proximité sans contact (410).

13. Procédé selon la revendication 10, comprenant en outre l'installation du gradient de force (400) dans un hélicoptère.

14. Procédé selon la revendication 10, comprenant en outre l'installation du gradient de force (400) dans un avion.
